# EUROPEAN PATENT APPLICATION

(11) **EP 4 458 572 A1**
(43) Date of publication of application: **06.11.2024**
(21) Application number: 24174040.6
(22) Date of filing: 03.05.2024
(51) Int. Cl.: B31B 50/59, B31B 50/64, B31B 50/84, B29C 57/00, B29C 65/08, B29C 65/00, B31F 1/00, B31F 7/00, B31B 100/00, B31B 105/00, B31B 110/10, B65B 51/22, B65B 61/18

(54) **APPARATUS FOR SHAPING A TOP PORTION OF PACKAGE BODY**

(30) Priority: 04.05.2023 EP 23171579
(71) Applicant: Tetra Laval Holdings & Finance S.A., 1009 Pully (CH)
(72) Inventor: Danielsson, Anders, 221 86 Lund (SE); Holm, Henrik, 221 86 Lund (SE); Lanci, Antonio, 41123 Modena (IT); Torriani, Laurent, 41123 Modena (IT)
(74) Representative: Tetra Pak - Patent Attorneys SE

(57) **Abstract**

An apparatus is configured for shaping a three-dimensional top portion of a package body. The apparatus comprises an anvil (21') with a three-dimensional shape. The anvil (21') is configured to receive a sleeve (11) of base material so that a front sleeve portion (11') of the sleeve (11) is located to surround at least part of the anvil (21'). The apparatus also comprises a sonotrode (25) that defines a three-dimensional cavity, which is configured to receive the anvil (21') and the front sleeve portion (11') on the anvil (21'). The sonotrode (25) is configured to apply mechanical vibrations, via the three-dimensional cavity, to the front sleeve portion (11') on the anvil (21') to cause a permanent deformation of the front sleeve portion (1 1') to form the three-dimensional top portion.

## Description

### Technical Field

The present disclosure relates to manufacture of packages for food products and, in particular, a technique of shaping a top portion of a package body of such a package.

### Background Art

Within the food industry, it is common practice to pack food products in packages manufactured from paper-based laminates comprising a core layer of paper or paperboard and one or more barrier layers of, for example, plastic.

One common package type is manufactured by forming a tube-shaped blank ("sleeve") of the above-described paper-based laminate and sealing one end of the sleeve by a top of plastic material, to form a bottle-shaped package body. Conventionally, the top is formed directly on the end of the sleeve by injection molding. The top comprises a neck portion that defines a pouring spout, which is sealed by a cap and/or a foil. The cap and/or foil may be provided by the injection molding or in a separate mounting step. The package body is then transported to a subsequent filling station, in which the liquid product is filled through the opposite open end of the package body. After filling, the open end of the package body is folded and sealed to form a final package. An example of this manufacturing technique is shown in WO2007/106006.

A variant is shown in WO2010/085182, in which one end of the sleeve is formed into a shoulder portion before a neck-defining top is injection molded onto the shoulder portion. The shoulder portion is formed by folding the packaging material into the sleeve along crease lines to form radial pleats. During the injection molding, the upper edges of the radial pleats are covered by injected plastic material, to fix the folding and avoid formation of crevices inside the package. A related solution is shown in WO2004/041663.

In yet another variant, shown in DE102005048821, a prefabricated pyramid-shaped top of plastic material is attached to four foldable flaps at one end of the sleeve. The flaps are shaped to conform with the pyramid-shaped top, which is attached to the flaps by horizontal welds along the respective side of the pyramid-shaped top.

It is a general desire in the field of packaging for food products to provide bottle-shaped packages suitable for mass production. There is thus a need for a robust technique of manufacturing bottle-shaped packages at high throughput with low rejection rates.

It is also generally desirable to improve recyclability of the packages, by making it possible to reduce the use of different types of material in the package.

### Summary

It is an objective to at least partly overcome one or more limitations of the prior art.

One such objective is to provide a simple and efficient technique of manufacturing a bottle-shaped package body for use in packaging of food products.

One or more of these objectives, as well as further objectives that may appear from the description below, are at least partly achieved by an apparatus and a sonotrode according to the independent claims, with embodiments being defined by the dependent claims.

A first aspect is an apparatus for shaping a three-dimensional top portion of a package body. The apparatus comprises an anvil with a three-dimensional shape, the anvil being configured to receive a sleeve of base material so that a front sleeve portion of the sleeve is located to surround at least part of the anvil. The apparatus further comprises a sonotrode that defines a three-dimensional cavity which is configured to receive the anvil and the front sleeve portion on the anvil, the sonotrode being configured to apply mechanical vibrations, via said three-dimensional cavity, to the front sleeve portion on the anvil to cause a permanent deformation of the front sleeve portion to form the three-dimensional top portion.

A second aspect is a sonotrode for use in the apparatus of the first aspect.

A third aspect is an anvil for use in the apparatus of the first aspect.

A fourth aspect is a sonotrode comprising a cavity, which is defined by a three-dimensional cavity wall and configured to receive a three-dimensional anvil, said sonotrode being configured to apply mechanical vibrations to the three-dimensional anvil via the three-dimensional cavity wall.

Below, some embodiments of the apparatus of the first aspect are recited. These embodiments are also applicable to the second to fourth aspects.

A longitudinal center axis of the three-dimensional cavity may be aligned with a longitudinal center axis of the anvil when the front sleeve portion is received in the three-dimensional cavity.

The three-dimensional cavity may be configured to fit snugly onto the front sleeve portion on the anvil.

The apparatus may be configured to, during application of the mechanical vibrations, press the anvil and the sonotrode towards each other with a predefined force to compress the base material of the front sleeve portion.

The apparatus may be configured to apply the predefined force to compress the base material by at least 10% and preferably at least 50% during the application of the mechanical vibrations.

The three-dimensional cavity may extend from an entrance opening into the sonotrode in a depth direction and is defined by a cavity wall that surrounds the three-dimensional cavity in a peripheral direction.

The anvil may comprise a three-dimensional surface portion that is shaped in conformity with a three-dimensional wall portion of the cavity wall, said three-dimensional wall portion being circumferential in the peripheral direction and defining a band-shaped contact surface for engagement with the three-dimensional surface portion of the anvil, via the front sleeve portion.

The three-dimensional surface portion of the anvil may be shaped to be locally parallel with the three-dimensional wall portion of the cavity wall when the anvil is received in the three-dimensional cavity.

At least one of the anvil or the cavity wall may comprise surface structures, which are configured to cause a local modification in engagement force onto the front sleeve portion from the anvil and the cavity wall.

The surface structures may be arranged to extend in alignment with deformation zones on the front sleeve portion, said deformation zones being arranged to localized deformation of the front sleeve portion when the front sleeve portion is received in the three-dimensional cavity.

The surface structures may be elongated and extend in the depth direction when the anvil is received in the three-dimensional cavity.

At least a subset of the deformation zones may be configured to form a plurality of overlapping layers of the base material when the front sleeve portion is received in the three-dimensional cavity.

The surface structures may comprise elongated depressions configured to receive the plurality of overlapping layers of a respective deformation zone in said at least a subset of the deformation zones.

One or more of the deformation zones may be configured to form an elongated joint between adjacent edges of the base material when the front sleeve portion is received in the three-dimensional cavity.

The surface structures may comprise an elongated depression configured to receive the elongated joint when the front sleeve portion is received in the three-dimensional cavity.

The cavity wall may comprise a shoulder-defining wall portion, which is configured to deform at least part of the front sleeve portion into a shoulder portion of the package body.

The sonotrode may be configured with an increasing radial thickness of material around the three-dimensional cavity along at least a portion of the shoulder-defining wall portion in the depth direction.

The three-dimensional cavity may have a non-circular cross-section transversely to the depth direction, wherein radial projections are distributed around the entrance opening and are located at positions of maximum radial distance to a centerline of the three-dimensional cavity.

A front end portion of the anvil may comprise a mounting structure for a neck element, which comprises a tubular portion for defining an access opening on the package body, wherein the mounting structure is arranged to locate the neck element at least partly within the front sleeve portion when the front sleeve portion is located on the anvil.

The cavity wall may comprise a neck-defining wall portion, which is configured to drive the front sleeve portion into engagement with a flange on the neck element when the front sleeve portion is received in the three-dimensional cavity.

The cavity wall may further comprise a bottom wall portion adjacent to the neck-defining wall portion, wherein the bottom wall portion is configured to receive the tubular portion of the neck element when the front sleeve portion is received in the three-dimensional cavity.

The bottom wall portion may be configured to be spaced from the tubular portion of the neck element when the front sleeve portion is received in the three-dimensional cavity.

The entrance opening may be defined by a tapering wall portion, which is inclined into the three-dimensional cavity to receive the front sleeve portion into the three-dimensional cavity.

The sonotrode may be arranged with the three-dimensional cavity facing upwards in relation to gravity.

The sonotrode may comprise first and second end surfaces, and a circumferential outer surface, which extends between the first and second end surfaces, wherein the three-dimensional cavity is formed in the first end surface.

The circumferential outer surface may have a convex shape between the first and second end surfaces.

The second end surface may be configured for mechanical attachment to a generator unit to receive the mechanical vibrations.

The apparatus may comprise the generator unit, which is configured to generate and transfer the mechanical vibrations to the sonotrode.

The generator unit may be configured to generate the mechanical vibrations with a frequency given by a distance between the first and second end surfaces.

The circumferential outer surface of the sonotrode may be shaped to cause the mechanical vibrations to locally vibrate the cavity wall essentially perpendicular to the front sleeve portion on the anvil when the front sleeve portion is received in the three-dimensional cavity.

At least one channel may be defined in the sonotrode to extend from a first opening in a bottom portion of the three-dimensional cavity to a second opening in the circumferential outer surface.

Said at least one channel may extend away from the first end surface.

The apparatus may comprise a deformation unit, which is configured to, before the front sleeve portion is received in the three-dimensional cavity, engage the front sleeve portion on the anvil to cause a preparatory deformation of the front sleeve portion.

The deformation unit may comprise engagement elements for engagement with a respective deformation zone on the front sleeve portion, said respective deformation zone being arranged to facilitate localized deformation of the front sleeve portion when the front sleeve portion is received in the three-dimensional cavity.

The engagement elements may be configured to be biased towards the respective deformation zone.

The deformation unit may be operable to slide the engagement elements into engagement with the respective deformation zone.

The deformation unit may be configured to synchronously engage the engagement elements with the respective deformation zone.

The deformation unit may be arranged in front of the three-dimensional cavity to engage the front sleeve portion as the front sleeve portion is relatively moved towards the three-dimensional cavity.

The deformation unit may be spaced from and operably independent of the sonotrode, said apparatus further comprising a transportation device for moving the elongated holder with the sleeve from the deformation unit to the sonotrode.

The base material of the front sleeve portion may comprise a plastic material configured to be softened by the mechanical vibrations as applied by the sonotrode, and subsequently hardened in absence of the mechanical vibrations, to achieve the permanent deformation of the front sleeve portion.

The base material may comprise a sheet, and the plastic material may be provided on at least one side of the sheet.

The base material may be compressible.

The three-dimensional cavity may form a blind hole in the sonotrode.

The sonotrode may be a solid block of material.

The anvil may be removably included in an elongated holder for receiving the sleeve of base material.

The apparatus may further comprise a translation device which is connected to the sonotrode and operable to move the sonotrode linearly in relation to the anvil.

Still other objectives, features, embodiments, aspects and advantages of the invention will appear from the following detailed description as well as from the accompanying schematic drawings.

### Brief Description of the Drawings

Fig. 1A is a schematic overview of an example manufacturing process in accordance with an embodiment using a first-type blank, Figs 1B-1C are plan view of alternative blanks for use in the example manufacturing process, and Fig. 1D is a side view of a neck element for use in the manufacturing process.
Fig. 2A is a plan view of an example first-type blank, Fig. 2B is a perspective view of a sleeve with a deformed front sleeve portion, Fig. 2C is a perspective view of a package body produced by the manufacturing process, Fig. 2D is a section view of the package body in Fig. 2C, Fig. 2E is an enlarged view of a portion of Fig. 2D, and Fig. 2F is a section view of a blank material.
Fig. 3 is a schematic view of an example station for manufacture of package bodies in accordance with embodiments.
Fig. 4A is a section view of an example top forming station during operation in the station in Fig. 3, Fig. 4B is a perspective view of an example anvil for use in a top forming station, Figs 4C-4D are section views of blank material located on an anvil, Figs 4E-4G are side, section and bottom plan views of the anvil in Fig. 4B.
Figs 5A-5B are perspective views of an example sonotrode for use in a top forming station, Fig. 5C is a plan view of the sonotrode, Fig. 5D is a side view of the sonotrode, Fig. 5E is a section view of the sonotrode in Fig. 5C, Fig. 5F is a side view of the sonotrode shifted by 45° around its longitudinal axis in relation to Fig. 5D, Fig. 5G is a section view of the sonotrode in Fig. 5F.
Fig. 6 is a section view of the anvil in Fig. 4B as provided with a sleeve and a neck element, in relation to a deformation unit.
Fig. 7A shows a vibration cycle of an example sonotrode, and Fig. 7B is a schematic view of a perimeter line of the cavity in the sonotrode at different stages during the vibration cycle in Fig. 7A.
FIG. 8 is a schematic view of an alternative station for manufacture of package bodies in accordance with embodiments.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

The present disclosure relates to a technique of producing a package for food products. The technique involves the use of welding to shape a three-dimensional (3D) top portion of the package. The welding involves transfer of mechanical vibrations to a packaging material to create a fuse or weld between different portions of the packaging material. The weld is produced by heating through friction caused by the mechanical vibrations. The mechanical vibrations may be in the ultrasonic range, for example 15-40 kHz, resulting in so-called ultrasonic welding. The mechanical vibrations are transferred to the packaging material by a so-called sonotrode, also known as horn. The packaging material is engaged, under pressure, between the sonotrode and an anvil, also known as nest. The anvil is not actively vibrated. Conventionally, the sonotrode and anvil are configured to engage along a line, resulting in a one-dimensional weld. The present disclosure is based on the fundamental insight that at least part of the top portion may be produced by simultaneously performing welding in three dimensions, specifically by using a sonotrode with a 3D surface that is configured to transfer the mechanical vibrations to the packaging material when held against an anvil shaped in conformity the 3D surface of the sonotrode. The 3D welding is capable of forming welds of any 3D shape and any size. As used herein, a 3D surface comprises one or more curved or non-planar surface portions in a three-dimensional Euclidian coordinate system. For example, in a bottle-shaped package, the top portion may have the general shape of a dome, which is a 3D object. This novel technique of three-dimensional welding (3DW) allows the top portion, or at least part thereof, to be shaped in a single welding operation, which provides for high throughput and reliability in production. The packaging material may be made of paper or cardboard, having thereon a thermoplastic material to be melted during the welding operation and subsequently hardened. The three-dimensional welding makes it possible to produce at least part of the top portion from the packaging material that forms the main package body. This will reduce the amount of plastic material in the package body, compared to when the top portion is injection molded or otherwise produced entirely of plastic material.

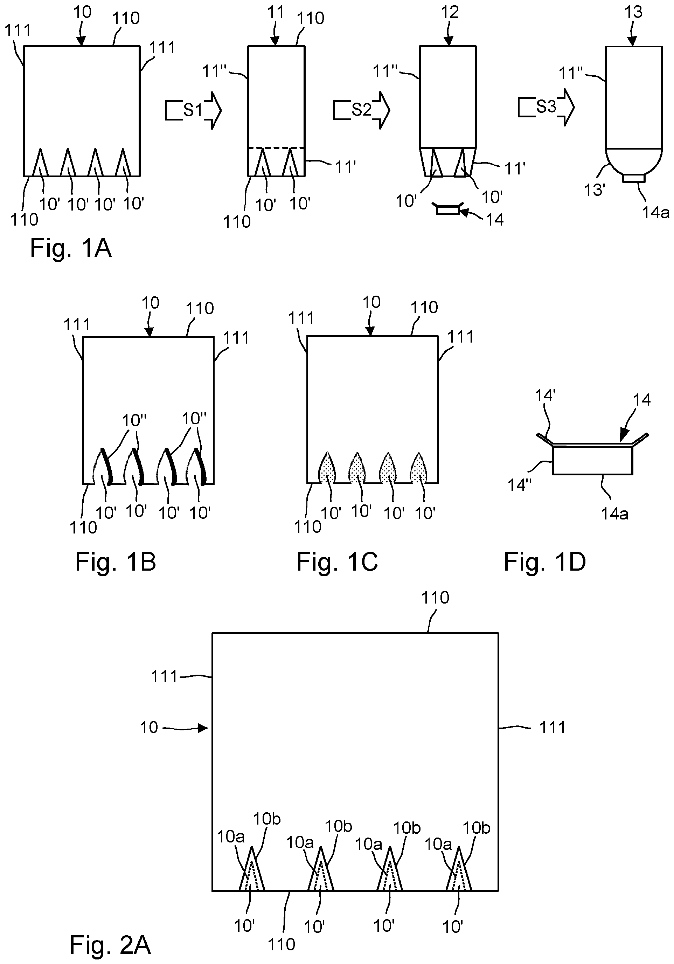

Fig. 1A shows an overview of operational steps, from left to right, for producing a package body in accordance with embodiments. The illustrated procedure starts with a sheet or blank 10 of packaging material, also denoted base material herein. The sheet 10 is rectangular and comprises opposing end edges 110 which are connected by side edges 111. In the illustrated example, an end portion of the sheet 10 at one of the end edges 110 has predefined deformation zones 10' that enable a controlled and well-defined deformation of the base material during production of the package body. In some embodiments, the respective deformation zone 10' comprises one or more crease lines or fold lines. A crease line acts as a hinge for folding the base material and may be implemented as a depression in the base material. If the depression is formed on one side of the sheet, folding is facilitated on this side. The crease lines are arranged to cause the base material to be folded onto itself in the 3D welding (operational step S3). In some embodiments, the deformation zones 10' are omitted. In operational step S1, the sheet 10 is formed into a sleeve or collar 11 by overlapping and joining edge portions at the side edges 111, for example by gluing or welding. The overlapping edge portions form a longitudinal seam (not shown) that extends along the sleeve 11. The sleeve 11 is a cylindrical body with any cross-section, circular or non-circular. The sleeve 11 comprises a front portion 11' ("front sleeve portion") that will be shaped into a top portion during production of the package body 13. If present, the deformation zones 10' are located in the front sleeve portion 11'. The remainder of the sleeve 11 forms a main body 11", which extends from the front sleeve portion 11' to the opposite end of the sleeve 11. In operational step S2, the front sleeve portion 11' is subjected to a preparatory deformation or "pre-forming", resulting in a deformed sleeve 12. The pre-forming is optional and is done to provide the front sleeve portion 11' with a shape suitable for subsequent operational step S3. Typically, as shown, the pre-forming changes the shape of the front sleeve portion 11' from a cylinder to a truncated cone. The pre-forming may improve the ability of operational step S3 to generate top portions with consistent shape, potentially reducing the rejection rate. The pre-forming may also ensure a consistent attachment of a neck element (see below) to the top portion in operational step S3. The pre-forming may be done by mechanically engaging a deformation unit (not shown) with the front sleeve portion 11' to bend the base material. For example, the pre-forming may involve causing the base material to fold around the crease lines. In operational step S3, the deformed sleeve 12 is subjected to the above-mentioned 3D welding to produce a package body 13 with a top portion 13' of desired 3D shape. As will be explained in detail further below, in operational step S3, the base material is folded onto itself as the front sleeve portion 11' is deformed into a desired shape and the overlapping portions are fused together by the 3D welding to fix the shape of the front sleeve portion 11', thereby producing the top portion 13'.

As shown in Fig. 1A, a prefabricated neck element 14 may be supplied to operational step S3, to be integrated in the top portion 13' by the 3D welding. The neck element 14 defines an access opening 14a, through which the food product is accessed by the consumer. The neck element 14 may comprise a cap or a foil that seals the access opening 14a. Alternatively, a cap or foil may be attached to cover the access opening 14a in a subsequent operational step (not shown). The package body 13 is then conveyed to a filling station (not shown), in which a food product is filled into the package body 13 through its upwardly facing open end, whereafter the upwardly facing open is sealed, as is well known in the art.

An example of a neck element 14 is shown in Fig. 1D. The neck element 14 comprises a tubular portion 14" which defines the access opening 14a. The tubular portion 14" may comprise external threads (not shown) for engagement with a cap. As noted above, the cap may or may not be included in the neck element 14. The neck element 14 further comprises a circumferential flange 14', which projects from the tubular portion 14". The flange 14' defines an attachment surface, which is joined with the base material in the package body 13, either during the 3D welding or thereafter.

Many variations are possible. If the pre-forming is omitted, the 3D welding is performed directly on the sleeve 11.The prefabricated neck element 14 need not be attached by the 3D welding but may be attached to the package body 13 in a separate operational step after the 3D welding. Alternatively, a neck element may be formed and attached by injection molding after the 3D welding.

Further, the deformation zones 10' need not comprise crease lines. Fig. 1B shows a sheet 10 with deformation zones 10' in the form of cutouts. Each cutout 10' is defined by boundary edges of base material. The respective cutout 10' is shaped so that its boundary edges are aligned and brought into contact with each other when the front sleeve portion 11' is deformed in operational step S3 and are fused together by the 3D welding. To ensure a solid and durable seal between the boundary edges, a strand 10" of thermoplastic material may be provided on at least part of the boundary edges around the respective cutout 10'. The boundary edges are preferably curved (non-linear) to ensure a durable seal and obviate wrinkle formation. In some embodiments, as shown, the boundary edges are convex.

Fig. 1C shows a sheet with deformation zones 10' in the form of cutouts covered by a film or web of thermoplastic material. The provision of the film potentially relaxes the need for proper alignment between the boundary edges of the cutout during the 3D welding, since the film will be folded onto the base material as the front sleeve portion 11' is deformed in operational step S3 and thus covers a larger surface area than the strand 10" in Fig. 1B. Thus, the deformation zones 10' in FIG. 1C may allow base material to overlap when the cutouts 10' are closed by the deformation in operational step S3.

It is also conceivable that the deformation zones 10' comprise any combination of the variants in Figs 1A-1C, for example crease lines and cutouts.

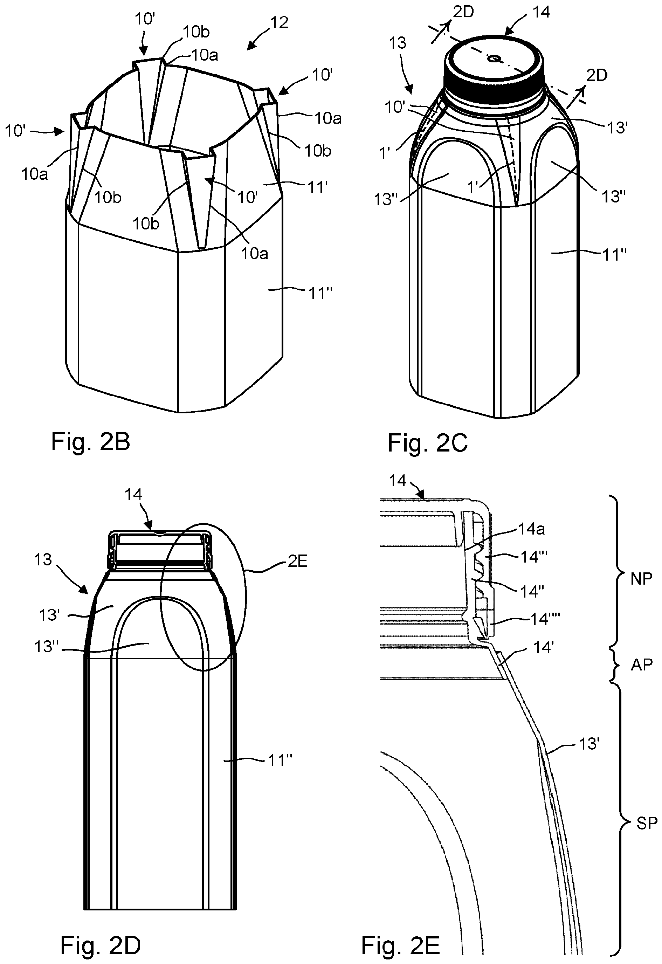

Fig. 2A shows a detailed example of a sheet 10 with deformation zones 10' formed by crease lines that promote a predefined bending pattern of the base material in the respective deformation zone 10'. The respective deformation zone 10' comprises a first set of crease lines 10a that promote bending in one direction, a second set of crease lines 10b that promote bending in the opposite direction. Specifically, when the sheet 10 is formed into the sleeve 11, the first set of crease lines 10a promote formation of outward folds that project away from the interior of the sleeve 11, and the second set of crease lines 10b promote formation of inward folds that project into the interior of the sleeve 11. The crease lines 10a, 10b may be linear, as shown. The first and second sets of crease lines 10a, 10b may be arranged to define a respective triangle, for example an isosceles triangle, which has its base at the end edge 110 and thus at the front edge of the front sleeve portion 11'. The triangles of the respective deformation zone 10' are aligned with each other so that one triangle is arranged within the other triangle. In the illustrated example, crease lines 10a are arranged around crease lines 10b, although the opposite is also possible. In a variant, the apexes of the triangles are removed, forming truncated triangles, which are believed to reduce wrinkle formation on the top portion. Such truncated triangles are included in a deformed sleeve 12 shown in Fig. 2B. As shown, the crease lines 10a form outward folds and the crease lines 10b form inward folds in the front sleeve portion 11'. Fig. 2C shows a package body 13, which is produced from the deformed sleeve 12 in Fig. 2B. The main body 11" is unaffected by the 3D welding, but the front sleeve portion 11' has been shaped into a top portion 13' with a substantially smooth exterior surface. The base material has been folded onto itself in the deformation zones 10', by way of the crease lines, and fused together. The dashed lines in the respective deformation zone 10' in Fig. 2C indicate where the inward folds (crease lines 10b) meet in a joint 1' on the inside of the package body 13. By fusing overlapping base material in the deformation zones 10', a strong and durable shaping of the top portion 13' is achieved. Further, the deformation zones 10' are rendered flat in the top portion 13, both on the outside and the inside of the package body. A flat inner surface may improve food safety and facilitate sterilization, if needed. Fig. 2C also shows that the 3D welding typically also deforms the front sleeve portion 11' outside of the deformation zones 10'. In the illustrated example, slightly projecting panels 13" have been formed on the sides of the top portion 13'. The deformation zones 10' differ from the rest of the front sleeve portion 11' by being formed to accommodate for the base material that is rendered superfluous as the front sleeve portion 11' is deformed into a dome shape. In the examples of Figs 1B-1C, the superfluous base material is cut away, at least partly. In the example of Fig. 2A, the superfluous base material is instead folded onto itself in a controlled manner.

Fig. 2D shows a cross-section of the package body 13 in Fig. 2C taken in direction 2D, and Fig. 2E is an enlarged view of the region 2E in Fig. 2D. As seen, a dome-shaped top portion 13' is formed to extend from the main body 11" to a neck part NP of the package body 13. The neck part NP is formed by the neck element 14. The top portion 13' comprises a band-shaped shoulder part SP adjacent to the main body 11" and an attachment part AP at the distal end of the top portion 13'. The attachment part AP is attached to the flange 14' of the neck element 14. In the illustrated example, a cap‴ is engaged with the tubular portion 14" of the neck element 14, to seal the access opening 14a that is defined by the tubular portion 14", by internal threads of the cap 14‴ being engaged with external threads on the tubular portion 14". As is well-known in the art, the neck element 14 also includes a tamper-proofing element 14ʺʺ to be ruptured when the cap 14‴ is unscrewed from the tubular portion 14".

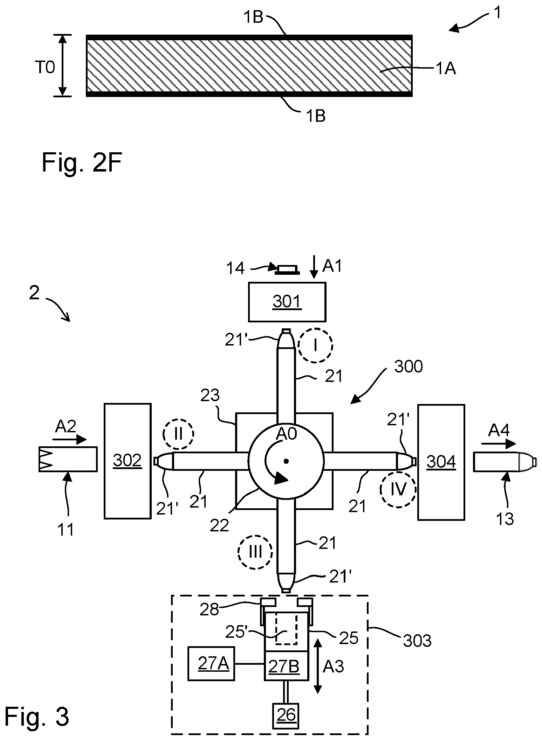

Fig. 2F is a section view of the base material 1 in a sheet 10. The base material 1 is malleable so that it can be re-shaped by application of force. In some embodiments, the base material 1 is compressible. This improves the performance of the 3D welding. In the illustrated example, the base material has a thickness T0 and comprises a core 1A, and a cover surface 1B of plastic material on both sides of the core 1A. The cover surface 1B may comprise any plastic material or combination of plastic materials that is softened by the mechanical vibrations as applied during the 3D welding, and subsequently hardened in absence of the mechanical vibrations. For example, the cover surface 1B may comprise a thermoplastic material. Depending on the bending pattern in the deformation zones 10', it may be sufficient to provide a cover surface 1B on one side of the core 1A only. It is also conceivable that one of the cover surfaces 1B is optimized for the 3D welding and the other cover surface 1B is optimized for another purpose, for example with respect to barrier properties. In some embodiments, the core 1A is or comprises a fiber-based material, for example paper or cardboard in one or more layers. Other materials or combinations of materials may define or be part of the core 1A, including plastic material. If the core 1A is made of plastic material, the cover surfaces 1B may be omitted.

Fig. 3 is a side view of a station or machine 2 for producing package bodies 13 in accordance with a non-limiting example. The station 2 comprises an indexing device 300, a neck loading device 301, a sleeve loading device 302, a top forming device 303 and an unloading device 304. The neck loading device 200 is configured to receive neck elements 14, as indicated by arrow A1, and arrange the neck elements 14 on the indexing device 300. The sleeve loading device 302 is configured to receive incoming sleeves 11, as indicated by arrow A2, and arrange the sleeves 11 on the indexing device 300. The top forming device 303 is configured to re-shape the sleeves 11 and attach the neck elements 14 to form package bodies 13. The unloading device 304 is configured to remove the package bodies 13 from the indexing device 300 and provide them for downstream processing, as indicated by arrow A4.

The loading and unloading devices 301, 302, 304 may be configured in many different ways to perform their respective function and will not be described in detail. Some non-limiting examples are found in WO2007/106006.

The indexing device 300 comprises elongated holders or arms 21 that are attached to or otherwise combined with a rotatable member 22, also known as wheel or mandrel wheel. Each of the arms 21 comprises an inner tool 21', which corresponds to the above-mentioned anvil. In some embodiments, the anvil 21' is removably attached to the arm 21, to facilitate replacement of the anvil 21'. The anvil 21' is subjected to wear and may need to be replaced. Also, anvils 21' with another 3D shape, and a corresponding sonotrode 25, may be installed to produce package bodies 13 with a different 3D shape of the top portion 13.

The elongated arms 21 project radially from and are equidistantly distributed around the wheel 22. In the illustrated example with four arms 21, each arm is arranged at right angles to its neighboring arms. A drive unit 23 is connected to the wheel 22 and operable to rotate the wheel 22 as indicated by an arrow A0. The drive unit 23 may be an electric motor capable of accurate angular positioning, for example a servo motor or a stepper motor. The drive unit 23 is operable to intermittently rotate or index the wheel 22 and thus the arms 21 into four different angular positions. The drive unit 23 is stopped at the respective angular position. The positions are indicated by Roman numerals within dashed circles in Fig. 3. Position I is a first loading position, in which the anvil 21' is aligned with the neck loading device 301. Position II is a second loading position, in which the anvil 21' is aligned with the sleeve loading device 302. Position III is a processing position, in which the anvil 21' is aligned with the top forming device 303. Position IV is an unloading position, in which the anvil 21' is aligned with the unloading device 304.

The provision of four arms 21 with a respective anvil 21' caters for high throughput of the station 2, in that it enables four operations to be performed concurrently: loading a neck element 14 onto an anvil 21' at device 301, loading a sleeve 11 onto an anvil 21' at device 302, processing a sleeve 11 on an anvil 21' at device 303, and unloading a package body 13 from an anvil 21' at device 304.

The arms 21 extend from the wheel 22 in a common plane, which forms a rotation plane of the arms 21. Depending on implementation, the rotation plane may be vertical or horizontal.

In a variant, not shown, the neck loading device 301 is instead configured to arrange the neck element 14 onto the anvil 21' while the anvil 21' is moved between positions IV and I, or between positions I and II. In further variant, the neck loading station 301 is omitted, and the neck is attached or otherwise formed on package body 13 downstream of the unloading device 304.

The top forming device 303 comprises an outer tool 25, which is moveable in relation to the anvil 21' when in position III. The outer tool 25 is the above-mentioned sonotrode. In the illustrated example, the sonotrode 25 is linearly moveable between a rest position and an operative position, as indicated by a double-ended arrow A3. In the rest position, the sonotrode 25 is spaced from the anvil 21'. In the operative position, the sonotrode 25 is arranged to surround the anvil 21'. The top forming device 303 comprises an actuator or translation device 26, which is connected to the sonotrode 25 and operable to impart its movement between the rest position and the operative position. As shown by dashed lines, a cavity 25' is defined in the sonotrode 25 to receive the anvil 21'. Since a neck portion 14 and a sleeve 11 are arranged on the anvil 21', the sonotrode 25 thereby surrounds both the neck portion 14 and the front sleeve portion 11' (Figs 1A, 2B). The sleeve 11 is dimensioned such that the inner side of the sleeve 11 is at least partially in contact with the arm 21, thereby preventing it from falling off the arm 21 when the arm 21 is in position III. The cavity 25' defines the above-mentioned 3D surface. In its operative position, the sonotrode 25 is operable to re-shape the front sleeve portion 11' into the top portion 13' of the package body 13 while also attaching the neck element 14 to the front sleeve portion 11'.

The top forming device 303 further comprises a supply device 27A for generating a supply signal at a predefined frequency, and a conversion unit 27B, which is configured to convert the supply signal into a mechanical vibration. The supply device 27A and the conversion unit 27B jointly define a generator unit, which is configured to generate and transfer the mechanical vibrations to the sonotrode 25. The sonotrode 25 is mechanically attached to the conversion unit 27B to receive the mechanical vibrations. The conversion unit 27B may be of conventional configuration and comprises a transducer for converting the supply signal into mechanical vibrations. The mechanical vibrations may be produced by one or more piezoelectric crystals in the transducer. As is known in the art, the conversion unit 27B may also comprise a booster or amplitude coupler, which is configured to define the amplitude of the mechanical vibrations that are transferred to the sonotrode, by either amplifying or attenuating the amplitude of the mechanical vibrations generated by the transducer.

In the illustrated example, a deformation unit 28 is arranged to be located in front of the cavity 25'. The deformation unit 28 is configured to perform the above-mentioned preparatory deformation ("pre-forming") of the front sleeve portion 11'. The deformation unit 28 is arranged to be moveable with the sonotrode 25 to engage and pre-form the front sleeve portion 11' as the sonotrode 25 is moved towards and onto the anvil 21'. The deformation unit 28 may be attached to the sonotrode 25, as shown. Alternatively, the deformation unit 28 may be isolated from the mechanical vibrations, for example by being attached to a separate holder (not shown) which is moved in unison with the sonotrode 25 by the actuator 26 or another actuator (not shown).

The top forming device 303 in Fig. 3 is an example of an apparatus for shaping a three-dimensional (3D) top portion 13' of a package body 13. The apparatus comprises an anvil 21' with a 3D shape. The anvil 21' is configured to receive a sleeve 11 of base material 1 so that the front sleeve portion 11' is located to surround at least part of the anvil 21'. The apparatus further comprises a sonotrode 25 that defines a 3D cavity 25', which is configured to receive the anvil 21' and the front sleeve portion 11' as located on the anvil 21'. The sonotrode is configured to apply mechanical vibrations, via the 3D cavity 25', to the front sleeve portion 11' on the anvil 21' to cause a permanent deformation of the front sleeve portion 11' to thereby form the 3D top portion 13'.

As shown in Fig. 3, the sonotrode 25 may be arranged with the cavity 25' facing upwards in relation to gravity. This may reduce the risk that debris, which may be formed during the operation of the top forming device 303, is spread over the station 2. An upwardly facing cavity 25' also facilitates controlled removal of liquid or debris that may enter or be formed in the cavity 25' during operation of the top forming station 303. Controlled removal of debris may be important to ensure consistent quality of the package bodies 13 that are produced.

In some embodiments, as shown in Fig. 3, the cavity 25' forms a blind hole in the sonotrode 25. The blind hole has an axial extent limited by a bottom surface. A cavity 25' in the form of a blind hole allows the sonotrode 25 to comprise solid material between the cavity 25' and the conversion unit 27B, which is believed to improve proper transfer of the mechanical vibrations to the walls of the cavity 25'.

The station 2 need not be configured to rotate the respective arm 21 between the devices 301-304, but may be otherwise configured to shift the arm 21 between the devices 301-304, for example along a linear path.

It may be noted that the station 2 may alternatively be designed such that the sonotrode 25 is stationary and the anvil 21', with the sleeve 11 mounted thereon, is moved between a rest position spaced from the sonotrode 25 and an operative position in engagement with the sonotrode 25.

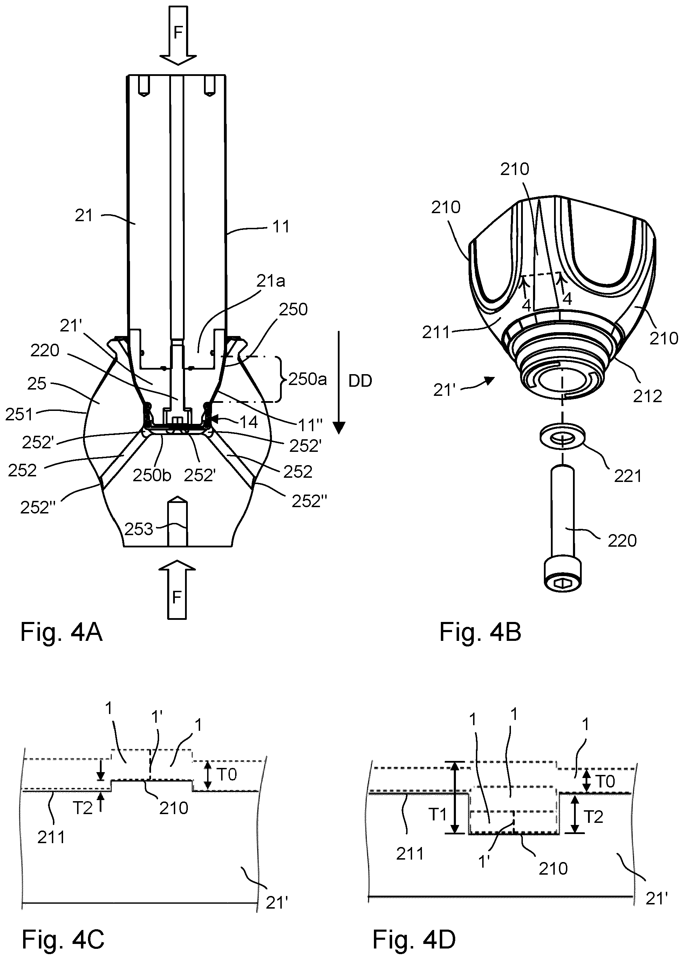

Fig. 4A is a section view of an example sonotrode 25 in engagement with an example anvil 21'. The anvil 21' and the sonotrode 25 may be included in the station 2 of Fig. 3. Both the anvil 21' and the sonotrode 25 may be made of metal. The anvil 21' is attached to the arm 21. A sleeve 11 has been slid onto the anvil 21', for example by the sleeve loading device 302 in Fig. 3, before the anvil 21' is received in the cavity 25'. Further, a neck element 14 has been attached to the anvil 21', for example by the neck loading device 301 in Fig. 3, and is received in the cavity 25'. The anvil 21' and the sonotrode 25 are forced into engagement with each other, by a force F, as indicated by opposing block arrows, while at least part of the front sleeve portion 11' is engaged between the anvil 21' and the sonotrode 25. The force F is applied during the welding process, and optionally before the welding process. The force F is adapted to cause the front sleeve portion 11' to be deformed into the intended shape of the top portion. The force F may be adapted to compress the base material by at least 10%, for example at least 50%, compared to the thickness T0 of the non-loaded base material (cf. Fig. 2F). In other embodiments, the compression may be at least 20%, 30%, 40%, 60% or 70%. In some embodiments, the force F is at least 500 N, for example at least 1000 N.

The anvil 21' and the cavity have surface portions with complementary 3D shapes. The anvil 21' is shaped in conformity with the cavity 25' of the sonotrode 25 so that the front sleeve portion 11', as arranged on the anvil 21', is snugly fitted within the cavity 25'. As used herein, a "snug fit" implies that the front sleeve portion 11' is in contact with both the anvil 21' and the cavity wall 250 around the full circumference of the front sleeve portion 11', at least when the force F is applied.

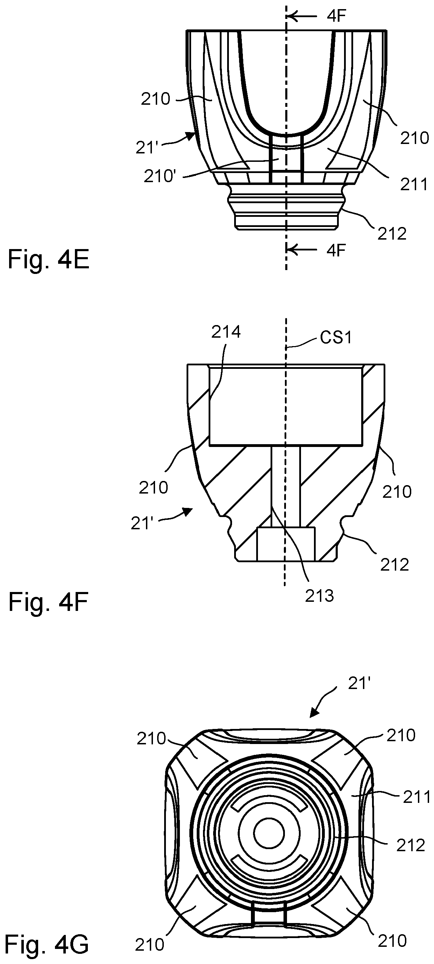

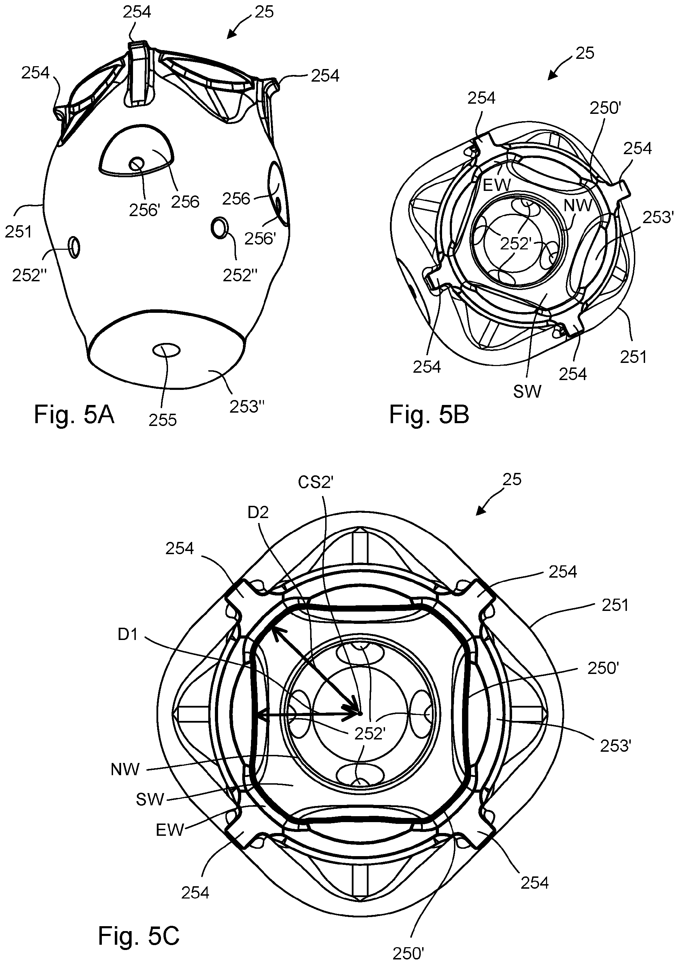

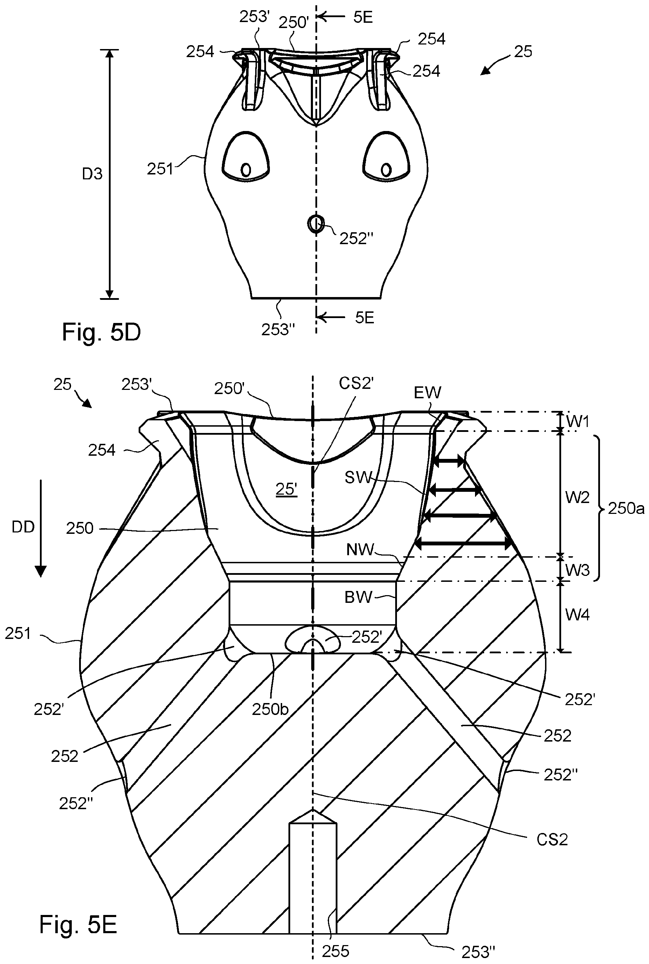

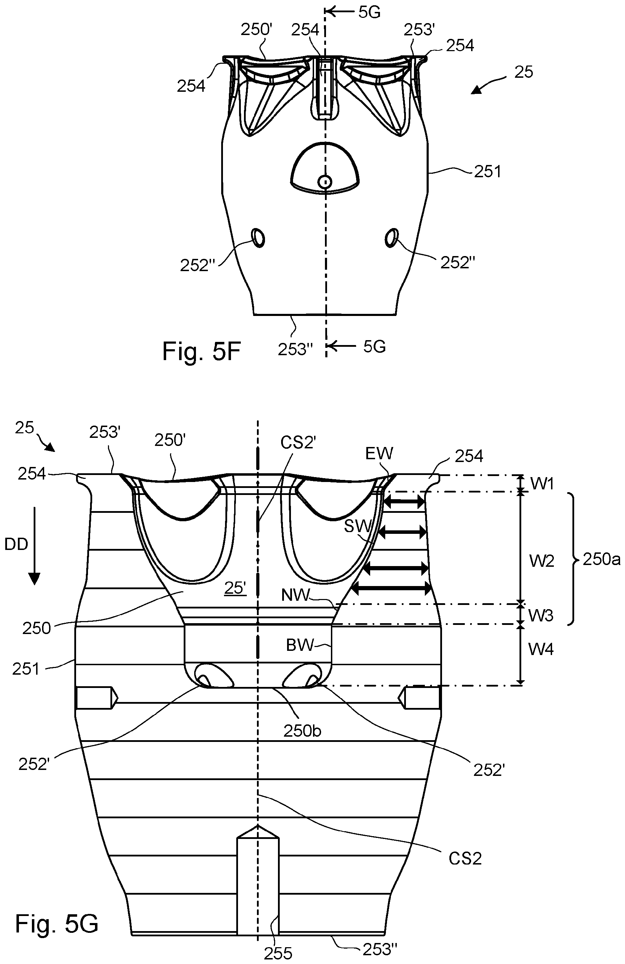

The anvil 21' is shown in perspective in FIG. 4B, and from one side in Fig. 4E. Fig. 4F shows a cross-section of the anvil 21' taken in the direction 4F in Fig. 4E. Fig. 4G is a plan view of the projecting end (free end) of the anvil 21'. The sonotrode 25 is shown in perspective in Fig. 5A and Fig. 5B, from two different angles. Fig. 5C is a plan view onto the entrance opening 250' of the cavity 25' in the sonotrode 25. The sonotrode 25 is shown from different sides in Fig. 5D and Fig. 5F, with the sonotrode being rotated by 45° around its longitudinal center axis between Fig. 5D and Fig. 5F. Fig. 5E is a section view taken in direction 5E in Fig. 5D, and Fig. 5G is a section view taken in direction 5G in Fig. 5F.

The anvil 21' has a longitudinal center axis or centerline CS1, indicated in Fig. 4F, and the cavity 25' has a longitudinal center axis or centerline CS2' indicated in Figs 5E and 5G. These center axes CS1, CS2' are aligned to coincide, when the anvil 21', and thus the front sleeve portion 11', is received in the cavity 25'.

In the illustrated example, the cavity 25' in the sonotrode 25 is defined by a peripheral cavity wall 250 and a bottom wall 250b (Figs 5E, 5G). The cavity wall 250 surrounds and limits the cavity 25' in a peripheral direction, and the cavity 25' has an axial extent in a depth direction DD (Figs 4A, 5E, 5G), from the entrance opening 250' to the bottom wall 250b. The cavity wall 250 comprises a 3D wall portion 250a (Fig. 4A, 5E, 5G), which is configured to engage a 3D surface portion 211 of the anvil 21', via the front sleeve portion 11'. The 3D wall portion 250a and the 3D surface portion 211 are shaped in conformity with each other, to achieve the above-mentioned snug fit of the front sleeve portion 11'. Thus, as indicated in Fig. 4A, the 3D wall portion 250a defines a band-shaped contact surface for engagement with the 3D surface portion 211 of the anvil 21', via the front sleeve portion 11'. The contact surface is band shaped in that it spans the full circumference of the cavity 25' in the peripheral direction and has an extent in the depth direction DD.

In some embodiments, to achieve the snug fit, the 3D surface portion 211 and the 3D wall portion 250a are shaped to be locally parallel when the anvil 21' is received in the cavity 25'. In this context, "locally parallel" implies that a tangent plane of the surface portion 211 and a tangent plane of the wall portion 250a, at corresponding locations on the surface portion 211 and the wall portion 250a, are approximately parallel, for example within ±10° or ±5°.

By comparing Fig. 2C and Fig. 4B, it is seen that the 3D surface portion 211 of the anvil 21' is shaped to provide the 3D shape of the top portion 13', including the projecting panels 13". Likewise, as seen in Figs 5E and 5G, the cavity wall 250 in the cavity 25' of the sonotrode 25 is shaped to provide the 3D shape of the top portion 13', including the projecting panels 13".

The free end of the anvil 21' comprises a mounting structure 212 for receiving the neck element 14. In the illustrated example, the mounting structure 212 is defined for form-fitted engagement with the neck element 14 so that the neck element 14 is held on the free end of the anvil 21' on its passage from the neck loading device 301 to the top forming device 303 (Fig. 3). As seen in Figs 4A-4B, the anvil 21' releasably included in the arm 21 by use of a bolt 220 and a washer 221. On the end opposite to the mounting structure 212, the anvil 21' comprises a fitting hole 214 (Fig. 4F), which is configured to receive an axially projecting arm element 21a (Fig. 4A). The anvil 21' defines a through-hole 213, which is arranged to mate with a mounting hole with inner threads in the projecting arm element 21a, for engagement with outer threads on the bolt 220.

In the example of Fig. 4B, the anvil 21' also comprises surface structures 210, which are configured to cause a local modification in engagement force onto the front sleeve portion 11' from the anvil 21' and the cavity wall 250. This means that the engagement force is modified compared to the alternative situation in which the surface structures 210 are omitted. In the illustrated example, the respective surface structure 210 is a confined area on the 3D surface portion 211 of the anvil 21'. In some embodiments, the surface structures 210 are located to coincide or extend in alignment with the deformation zones 10' on the front sleeve portion 11', when the sleeve 11 is pressed into engagement with the cavity wall 250. In some embodiments, the surface structures 210 may be designed to locally increase the engagement force, to enhance the friction and thus heat generation caused by the mechanical vibrations. In other embodiments, the surface structures 210 may be designed to achieve approximately the same engagement force as achieved by other parts of the 3D surface portion 211.

In some embodiments, as shown in Fig. 4A, the surface structures 210 are elongated and configured to extend in the depth direction DD of the cavity 25' when the anvil 21' received in the cavity 25'. Such elongate surface structures 210 may be relevant when the deformation zones 10' also have an extent in the depth direction DD, which is the case for the deformation zones 10' shown in Figs 1A-1C and Figs 2A-2C.

Fig. 4C is an example view of a cross-section taken in direction 4 of the anvil 21' in Fig. 4B. Further, base material 1 is overlaid in dashed lines to illustrate how the surface structure 210 may coincide with a deformation zone when the front sleeve portion 11' is pressed between the anvil 21' and the cavity wall 250. In this example, two separated edges of base material 1 will be brought together at an open joint 1'. Such a joint 1' may be formed by use of a sheet 10 with cut-outs, for example as shown in Fig. 1B or Fig. 1C. It is realized that the joint 1' will have an elongated extent in the depth direction DD of the cavity 25'. In the illustrated example, the surface structure 210 is elevated and thus defines a protrusion or ridge, which is arranged to carry the base material 1 at the joint 1'. The protrusion 210 will locally increase the engagement force between the anvil 21' and the cavity wall 250 and thereby locally increase the impact of the mechanical vibrations. Such a local increase may be beneficial to ensure that the joint 1's properly and permanently fused by the heat from the mechanical vibrations. The height T2 of the protrusion 210 relative to the surrounding surface may be dimensioned in relation to the thickness T0 of the base material 1 to achieve a proper local heating. In some embodiments, the ratio T2:T0 is larger than 0.1-0.3 and less than 0.7-0.9.

Fig. 4D is another example view of a cross-section taken in direction 4 of the anvil 21' in Fig. 4B. Here, the base material 1 is folded into a plurality of overlapping layers in the deformation zone, with the inner layer comprising an open joint 1' where different parts of the base material meet. This joint 1' is permanently fused by the heat from the mechanical vibrations. In Fig. 4D, three layers are stacked on top of each other. Such a stack of layers is, for example, formed by the deformation zones shown in Figs 2A-2B. In the illustrated example, the surface structure 210 defines a depression or tray, which is arranged to receive the stack of layers of base material 1 and the joint 1'. The depth T2 of the depression 210 may be dimensioned to achieve a desired engagement force between the anvil 21' and the cavity wall 250. In the absence of the depression 210, the engagement force may become excessive as a result of the stacked layers. In some embodiments, the depth T2 is equal to or smaller than the difference between the height T1 of the stacked layers and the thickness T0 of the base material. This will cause the engagement force on the base material in the stacked layers to be approximately equal to or larger than the engagement force on the base material around the depression 210. In some embodiments, T2 = T1 - T0 (1 + α), with α being larger than 0.1-0.3 and less than 0.7-0.9.

The anvil 21' may also include a dedicated surface structure for the longitudinal seam of the sleeve 11. This surface structure may be a protrusion or a depression depending on implementation. An example of such a surface structure is shown by reference numeral 210' in Fig. 4E.

The surface structures 210, 210' on the anvil 21' may be supplemented or replaced by similar surfaces structures on the cavity wall 250 in the sonotrode 25. However, it is currently believed to be beneficial to provide the surface structures 210 on the anvil 21' only. If surface structures are provided as depressions or protrusions on the cavity wall 250 in the sonotrode 25, corresponding surface structures may be observed on the outside of the top portion 13' of the resulting package body 13. This may be undesirable from an aesthetic point of view. It may also be generally desirable for the top portion 13' to have a smooth outer surface to mitigate adherence of dust and smudge. A smooth outer surface of the top portion 13' is achieved by having a smooth 3D wall portion 250a in the cavity 25'. Further, providing the surface structures on the cavity wall 250 in the sonotrode 25 may affect the vibration pattern of the sonotrode 25. Thus, the provision of surface structures 210, 210' on the cavity wall 250 may make it more difficult to design the sonotrode 25. The anvil 21', on the other hand, does not transfer mechanical vibrations and can be designed more freely, or even be modified in relation to an existing sonotrode, without affecting the vibration pattern of the sonotrode.

Turning to the example in Figs 5A-5G, the sonotrode 25 extends between first and second end surfaces 253', 253". The first end surface 253' comprises an entrance opening 250' to the 3D cavity 25', which extends in a depth direction DD from the first end surface 253' towards the second end surface 253". The depth direction DD is thus aligned with the axial centerline CS2 of the sonotrode 25, and the end surfaces 253', 253" are spaced in the axial direction, by a distance D3 (Fig. 5D). The second end surface 253" is configured for attachment to the conversion unit (27B in Fig. 3). In the illustrated example, the second end surface 253" is flat and configured to be bolted to the conversion unit by use of a threaded mounting hole 255 that extends axially towards the cavity 25'. It is understood that the sonotrode 25 is configured to receive the mechanical vibrations via the second end surface 253".

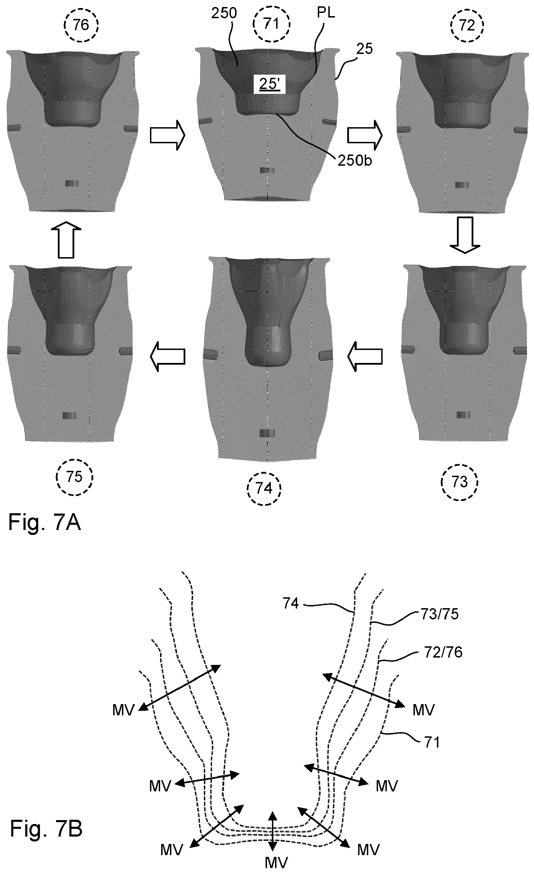

A circumferential outer surface 251 extends between the end surfaces 253', 253". In the illustrated example, the outer surface 251 is shaped to be generally convex in the axial direction. Thus, the distance between the outer surface 251 and the axial centerline is smallest adjacent to the end surfaces 253', 253". The shape of the outer surface 251 is given by a need for solid material around the cavity 25' so as to achieve a proper vibration pattern of the sonotrode 25 to achieve the intended permanent deformation of the front sleeve portion 11', as will be discussed below with reference to Figs 7A-7B.

The cavity 25' is arranged centrally in the first end surface 253'. Thereby, the axial centerline CS2' of the cavity 25' coincides with the axial centerline CS2 of the sonotrode 25 (Figs 5E, 5G). As noted above, the cavity 25' is defined by a peripheral cavity wall 250 and a bottom wall 250b, with the peripheral cavity wall 250 extending in the depth direction DD from the entrance opening 253' to the bottom wall 250b. Depending on function, the cavity wall 250 may be subdivided into different circumferential wall portions, as illustrated in Figs 5E and 5G. An entrance wall portion EW ("entrance wall") is arranged to extend from the entrance opening 250' into the cavity 25' over an axial distance W1 in the depth direction DD. The entrance wall EW is shaped to receive and guide the front sleeve portion 11' into the cavity 25'. In the illustrated example, the entrance wall EW defines a tapering surface. The tapering surface is inclined into the cavity 25', towards the centerline CS2' of the cavity 25'. The cavity wall 250 further comprises a shoulder-defining wall portion SW ("shoulder wall"), which is configured to shape the shoulder part SP of the package body 13 (cf. Fig. 2E) by deformation of the front sleeve portion 11'. The shoulder wall SW may be adjacent to the entrance wall EW, as shown, or there may be an intermediate wall portion between the entrance wall EW and the shoulder wall SW. The shoulder wall SW has an extent W2 in the depth direction DD. The shoulder wall SW is part of the band-shaped contact surface 250a. The cavity wall 250 further comprises a neck-defining wall portion NW ("neck wall"), which is configured to drive the front sleeve portion 11' into engagement with the flange 14' on the neck element 14 when the front sleeve portion 11', on the anvil 21', is pressed into the cavity 25'. The neck wall NW borders on the shoulder wall SW and spans a distance W3 in the depth direction DD. It is realized that the neck wall NW is also part of the band-shaped contact surface 250a. In the illustrated example, the neck wall NW defines a tapering surface, which is inclined towards the centerline CS2' of the cavity 25'. The cavity wall 250 also includes a bottom wall portion BW ("circumferential bottom wall"), which borders on the neck wall NW and is configured to receive the tubular portion 14" of the neck element 14 when the anvil 21' is inserted into the cavity 25'. In the example of Figs 5E and 5G, the circumferential bottom wall BW has an extent W4 in the depth direction DD. The circumferential bottom wall BW may be arranged with a spacing to the tubular portion 14" of the neck element 14 when the anvil 21' is inserted into the cavity 25'. This prevents that the tubular portion 14" is damaged by the mechanical vibrations. Further, the spacing ensures that the neck element 14 does not get stuck in the cavity 25" as a result of the welding. However, in some embodiments, the circumferential bottom wall BW may comprise a surface portion for contact with the tubular portion 14" to achieve a deliberate patterning or re-shaping thereof. The circumferential bottom wall BWis joined with the bottom wall 250b of the cavity 25'. The bottom walls BW, 250b jointly define a bottom cavity portion, which is arranged to house the neck element 14 when the anvil 21' is pressed into the cavity 25'.

As noted above, it is conceivable that the neck element 14 is attached or formed on the top portion 13' in a separate step after the deformation and welding in the sonotrode 25. In such embodiments, the neck wall NW and the circumferential bottom wall BW may be omitted from the cavity wall 250, and the shoulder wall SW may be configured to deform at least part of the front sleeve portion 11' into the top portion 13'. It is also conceivable to omit the entrance wall EW from the cavity wall 250.

In the illustrated example, the sonotrode 25 comprises a plurality of channels 252 that extend from inner openings 252' in the bottom portion of the cavity 25' to outer openings 252" in the outer surface 251. The channels 252 are arranged to enable removal of the debris or liquid that may be accumulated in the bottom portion of the cavity 25' during operation of the sonotrode 25. For example, debris may be generated by the deformation of the front sleeve portion 11'. In some embodiments, the outer openings 252" are connected to a pressure-control system (not shown), which is operable to generate suction in the channels 252 to draw debris and/or liquid away from the cavity 25'. The suction may be generated when the anvil 21' is inserted into the cavity 25' and/or when the anvil 21' is spaced from the cavity 25'. As seen in Figs 5E and 5G, the channels 252 may be inclined to extend away from the first end surface 253'. The evacuation of debris and/or liquid will thereby be at least partly driven by gravity. The pressure-control system is optional, but may also be used to create an overpressure in the channels 252 to assist the removal of the top portion 13' from the cavity 25' after the welding operation. Any number of channels 252 may be provided. A symmetric arrangement of channels 252 in relation to the cavity 25', as shown, may improve removal of debris and/or fluid. The inner opening 252' of the respective channel 252 may be formed in the circumferential bottom wall BW and/or in the bottom wall 250b.

In the illustrated example, the sonotrode 25 comprises a plurality of shallow depressions 256, which are formed in the outer surface 251 and includes a respective blind hole 256' (Fig. 5A). The depressions 256 and blind holes 256' are unrelated to the operation of the sonotrode 25. The blind holes 256' are used for mounting the sonotrode 25 in a jig during manufacture, and the depressions 256 are provided to provide space for tooling.

In the example of Figs 5A-5G, identical protrusions 254 of solid material are symmetrically distributed around the entrance opening 250'. The protrusions 254 project radially away from the centerline CS2' of the cavity 25', and also have an extent in the depth direction DD along the cavity 25'. The amount of material of each protrusion 254 increases monotonically towards the entrance opening 250', for example as seen in the perspective view of Fig. 5A. The protrusions 254 are included to achieve a controlled vibration of the cavity wall 250 at and near the entrance opening 250' when the cavity 25' has a non-circular shape in cross-section perpendicular to the depth direction DD. The cavity 25' in Figs 5A-5G has a non-circular cross-section as seen from the shape of the entrance opening 250' in Fig. 5C. Here, the entrance opening 250' has the shape of a truncated square, approximately forming an octagon with opposing parallel sides. The minimum distance D1 and the maximum distance D2 to the centerline CS2' of the cavity 25' are indicated by double-ended arrows in Fig. 5C. After significant experimentation, it has been found that with a uniform thickness of the material around the entrance opening 250', the mechanical vibration imparted to the cavity wall 250 at and near the entrance opening 250' will differ depending on the distance to the centerline CS2'. The protrusions 254 are therefore arranged to add mass at locations of maximum radial distance D2 to the centerline CS2', to modify at least the amplitude of the mechanical vibrations of the cavity wall 250 at and near these locations.

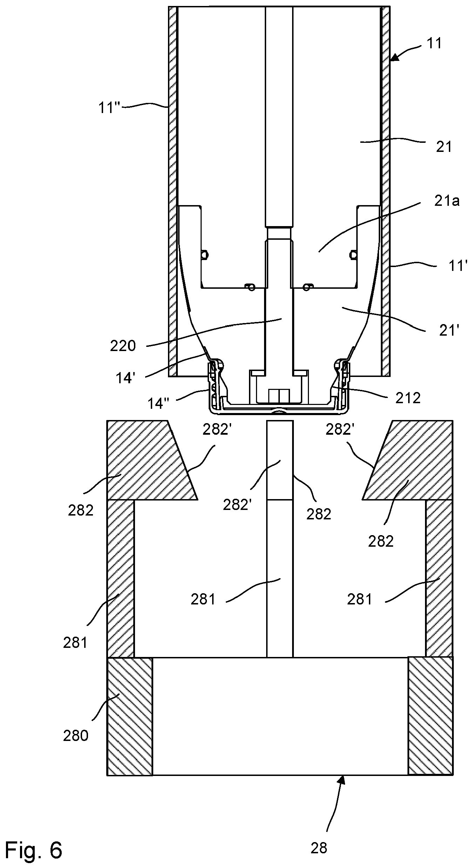

Fig. 6 shows, in section, a sleeve 11 that is located on an arm 21. The front sleeve portion 11' has been arranged to surround the anvil 21'. A neck element 14 has been releasably attached to the mounting structure 212, by a snap-fit between the tubular portion 14" and the mounting structure 212. In the illustrated example, the neck element 14 has an integrated cap (cf. 14‴ in Fig. 2E). A portion of the mounting structure 212 projects beyond the front edge of the front sleeve portion 11'. The flange 14' of the neck element 14 is located, by the mounting structure 212, within the front sleeve portion 11'. Thereby, when the front sleeve portion 11' is deformed by the engagement between the anvil 21' and the cavity wall 250, the outermost part of the front sleeve portion 11' is brought into contact with the flange 14' (cf. attachment part AP in Fig. 2E).

Fig. 6 also shows, in section, an example of a deformation unit 28 for pre-forming of the deformation zones 10' on the front sleeve portion 11'. The illustrated deformation unit 28 is configured to be arranged in front of the sonotrode 25, for example as shown in Fig. 3. To this end, the deformation unit 28 is ring-shaped to allow the anvil 21' to extend through the deformation unit 28. The deformation unit 280 comprises a base element 280 shaped as a hollow collar. Legs 281 extend from the base element 280 to engagement elements 282. Each engagement element 282 is arranged to engage, at a respective abutment surface 282', the base material of the front sleeve portion 11' in a respective deformation zone 10' as the anvil 21' is inserted into the deformation unit 28. In the illustrated example, the abutment surface 282' is flat and inclined to gradually steer the front sleeve portion 11' towards the anvil 21' as the anvil 21' is slid into the deformation unit 28. The engagement element 282 may, for example, cause a bending of the base material around one or more crease lines. In some embodiments, the engagement elements 282 are arranged to be biased towards the front sleeve portion 11', to ensure a well-defined engagement force between the engagement element 282 and the front sleeve portion 11' on the anvil 21'. In some embodiments, the legs 281 are configured to flex radially so as to allow the engagement elements 282 to slide along the anvil 21' and onto the arm 21. This will reduce the risk of damaging the sleeve 11. In some embodiments, the deformation unit 28 is a passive component, in which the engagement elements 282 are arranged to inherently engage and deform the front sleeve portion 11' when the anvil 21' is slid into the deformation unit 28. The example in Fig. 5 is a passive component. In other embodiments, not shown, the deformation unit 28 is instead an active component, in which the engagement elements 282 are actively moved, by an actuator, into engagement with the front sleeve portion 11' when the anvil 21' has been slid into the deformation unit 28. In one example, the engagement elements 282 are configured as tongues, which are retracted when the anvil 21' is inserted into the deformation unit 280 and then pushed into engagement with the front sleeve portion 11'.

It has been found beneficial to configure the deformation unit 28 to synchronously engage the engagement elements 282 with the front sleeve portion 11'. This means that the engagement elements 282, whether by an actuator or passively, engages the front sleeve portion 11' approximately at the same time. This will allow for uniform application of engagement force and thereby cause a well-controlled pre-forming of the front sleeve portion 11'. A well-controlled pre-forming is further enabled by arranging the engagement elements 282 in opposing pairs, so that they engage the front sleeve portion 11' from radially opposite directions. For the same reason, it may be beneficial to arrange the deformation zones 10' to form opposing pairs on the front sleeve portion 11', for example as shown in Fig. 2B.

The sonotrode 25 is designed to achieve a desired vibration pattern of the cavity wall 250, both with respect to the local direction of the mechanical vibrations and the local amplitude of the mechanical vibrations. It may be generally desirable for the mechanical vibrations to move the cavity wall 250 approximately at right angles to its local extent. This means that the cavity wall 250 is locally vibrated approximately perpendicularly to the front sleeve portion 11' on the anvil 21', at least within the shoulder wall SW and the neck wall NW (Figs 5E and 5G). In this context, "essentially perpendicular" may imply that the local direction of the vibrations deviates by less than β from 90°, with β being ±5°, ±10° or ±15° depending on implementation. Non-perpendicular vibrations may cause significant local abrasion of the base material, causing excessive formation of debris and potentially impairing the utility of the package body. It may also be generally desirable for the amplitude of the mechanical vibrations to be well-defined across the cavity wall 250, at least within the shoulder wall SW and the neck wall NW. Different amplitudes result in different heating and, ultimately, welding performance. In some embodiments, the sonotrode 25 is configured to have a consistent amplitude of the mechanical vibrations within the shoulder wall SW. In this context, "consistent amplitude" may imply that the amplitude deviates by less than 5%, 10% or 15% across the shoulder wall SW. It may also be desirable to ensure that the sonotrode vibrates at a single frequency, by analogy with a tuning fork, and thus to avoid presence of parasitic or alternative frequencies that sap power.

The vibration pattern of the sonotrode 25 may be evaluated by simulations, using a mathematical model of the sonotrode 25. The mathematical model may, for example, be based on finite element analysis (FEA), which is commonly used for vibration analysis.

Fig. 7A shows an estimated vibration pattern for the sonotrode 25 in Figs 5A-5G, generated by a proprietary simulation program. The sonotrode 25 is shown in cross-section at six consecutive stages during a vibration cycle, indicated by reference numerals 71-76. As seen, the sonotrode changes its shape significantly during a vibration cycle. Likewise, the shape of the cavity 25' changes significantly, both axially and radially. The shape of the cavity 25' (and the sonotrode 25) is effectively identical between stages 72 and 76, as well as between stages 73 and 75. The sonotrode 25 in Fig. 7A has been designed to cause the cavity wall 250 to vibrate approximately at right angles to its local extent. This is schematically illustrated in Fig. 7B, in which the periphery line PL of the cavity 25' is plotted for the different stages 71-76 in Fig. 7A. As shown by double-ended arrows MV, the periphery line PL is locally moved approximately perpendicularly over a vibration cycle. It should be understood that the vibration pattern is primarily relevant for the parts of the cavity wall 250 that will be in contact with the front sleeve portion 11' on the anvil 21', i.e. the above-mentioned contact surface 250a. In other parts of the cavity 25', the amplitude of vibration pattern may be controlled to prevent unintended contact with the front sleeve portion 11' or the neck element 14.

The present Applicant has identified a number of design features of the sonotrode 25 that may be tailored to achieve a proper vibration pattern.

A first design feature is the axial extent of the sonotrode 25. The axial extent is the distance D3 between the end surfaces 253', 253", as shown in Fig. 5D. It has been found that the distance D3 may be matched to the frequency of the supply signal that is provided from the supply unit 27A to the conversion unit 27B, and thus to the intended frequency of the mechanical vibrations in the sonotrode 25. This will reduce the risk that vibrations are generated at parasitic frequencies in addition to the intended frequency, and thereby improve the efficiency and durability of the sonotrode 25. Thus, for a given sonotrode, the supply unit 27A is tuned to the sonotrode and configured generate the supply signal with a frequency given by the distance D3 of the sonotrode. Likewise, the conversion unit 27B is adapted to this frequency.

A second design feature is the shape or contour of the outer surface 251 of the sonotrode 25. The shape of the outer surface 251 has been found to affect the amplitude and/or direction of the mechanical vibrations of the cavity wall 250. The present Applicant has found that, in some embodiments, a proper vibration pattern is attained when the outer surface 251 is shaped to be generally convex in the axial direction of the sonotrode 25, for example as shown in Figs 5A-5G. For comparison, a cylindrical shape of the outer surface 251 has been found to result in an unacceptable vibration pattern of the cavity wall 250, at least when the cavity 25' is dome shaped.

A third design feature is the radial thickness of the material around the band-shaped contact surface 250a. It has been found that a proper vibration pattern is attained when the radial thickness increases in the depth direction DD of the cavity 25' along all or a significant portion of the band-shaped contact surface 250a. This is illustrated in Figs 5E and 5G, where the radial thickness is indicated by thick double-ended arrows. In the illustrated example, the band-shaped contact surface 250a contains the shoulder wall SW and the neck wall NW. As noted above, the neck wall NW may be omitted in some implementations.

A fourth design feature is to configure the sonotrode 25 as a solid or unitary block of material. For example, the sonotrode 25 may be manufactured by casting, optionally followed by subtracting machining operations such as grinding, milling, boring, reaming, etc. Alternatively, the sonotrode 25 may be manufactured solely by subtracting machining operations. The solid or unitary block of material is free of joints or welds, resulting in a well-defined propagation of the mechanical vibrations from the end surface 253" to the cavity wall 250.

A fifth design feature is localized addition of material at the perimeter of the entrance opening 250', as exemplified by the radial protrusions 254. As discussed hereinabove, such localized addition of material may be beneficial for the vibration pattern when the cavity 25' has a non-circular cross-section transversely to the depth direction DD.

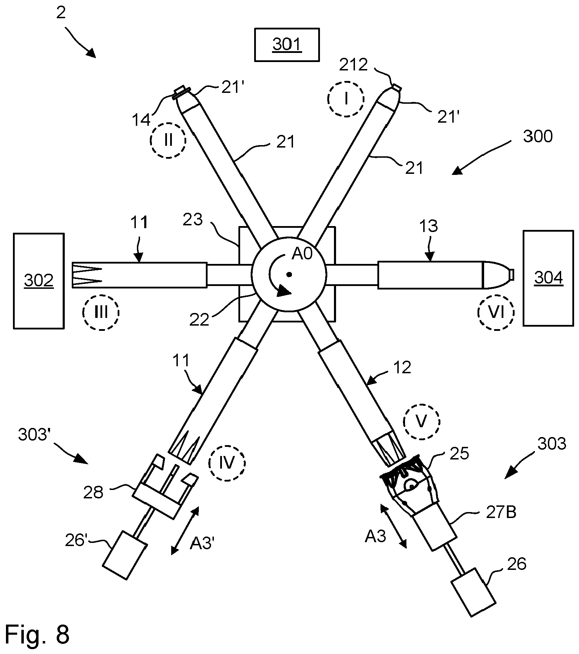

Fig. 8 shows an alternative configuration of the station 2 in Fig. 3. Fig. 8 illustrates the station 2 during production. Like, in Fig. 3, the station 2 comprises an indexing device 300, a neck loading device 301, a sleeve loading device 302, a top forming device 303 and an unloading device 304. In addition, the station 2 includes a separate pre-forming station 303', which is functionally located between the sleeve loading device 302 and the top forming device 303. The indexing device 300 has six elongated holders or arms 21, each including an anvil 21' at its outer end. The arms 21 are equiangularly arranged on the wheel 22. The indexing device 300 is indexed into six different angular positions I-VI during a full turn. The devices 301, 302, 303 and 304 may be identical to the corresponding devices in Fig. 3, except for the absence of a deformation unit 28 in the device 303. In the illustrated example, the neck loading device 301 is configured to arrange the neck element 14 onto the anvil 21' while the anvil 21' is moved between positions I and II. Thus, in position II, the neck element 14' has been attached to the anvil 21'. In an alternative, not shown, the device 301 may be aligned with position I or II, to attach the neck element 14 to the anvil 21'. In position III, a sleeve 11 is slid onto the arm 21 within its front sleeve portion is proper alignment with the anvil 21'. In position IV, the pre-forming device 303' is operated to perform the preparatory deformation ("pre-forming") of the front sleeve portion, by use of a deformation unit 28. The deformation unit 28 may be configured by analogy with the deformation unit 28 in Fig. 6. In the example of Fig. 8, the deformation unit 28 is linearly moveable between a rest position and an operative position, as indicated by a double-ended arrow A3'. In the rest position, the deformation unit 28 is spaced from the anvil 21'. In the operative position, the deformation unit 28 is arranged to surround the front sleeve portion on the anvil 21'. The pre-forming device 303' comprises an actuator or translation device 26', which is connected to the deformation unit 28 and operable to impart its movement between the rest position and the operative position. As noted above, the deformation unit 28 may be a passive or active component. If an active component, the actuator 26' is also operable to actively engage the deformation unit 28 with the front sleeve portion. In position V, the top forming device 303 is operated to re-shape the front sleeve portion into the top portion of the package body 13 while also attaching the neck element 14 to the front sleeve portion. In position VI, the unloading device 304 is operated to remove the package body 13 from the arm 21.

Fig. 8 is an example of an embodiment in which the deformation unit 28 is spaced from and operably independent of the sonotrode 25 and the sleeve 11 is moved, by a transportation device, from the deformation unit 28 to the sonotrode 25 after being pre-formed by the deformation unit 28. In the example of Fig. 8, the transportation device is formed by the combination of the wheel 22 and the drive unit 23, but other ways of transporting the sleeve is conceivable.

Although the combination of a sonotrode 25 with a 3D cavity 25' and a corresponding 3D anvil 21' has been developed and tested for use in shaping of top portions of package bodies, it may be used to shape a sheet material, whether formed into a sleeve or not, into a three-dimensional surface of any type of product, including packages for non-food products. Thus, the present disclosure generally provides a sonotrode 25 comprising a cavity 25', which is defined by a three-dimensional cavity wall 250 and configured to receive a three-dimensional anvil 21', where the sonotrode 25 is configured to apply mechanical vibrations to the 3D anvil 21' via the three-dimensional cavity wall 250, and thereby onto a sheet material arranged between the three-dimensional anvil 21' and the three-dimensional cavity wall 250

## Claims

1. An apparatus for shaping a three-dimensional top portion (13') of a package body (13), said apparatus comprising:
an anvil (21') with a three-dimensional shape, said anvil (21') being configured to receive a sleeve (11) of base material (1) so that a front sleeve portion (11') of the sleeve (11) is located to surround at least part of the anvil (21'), and
a sonotrode (25) that defines a three-dimensional cavity (25') which is configured to receive the anvil (21') and the front sleeve portion (11') on the anvil (21'), said sonotrode (25) being configured to apply mechanical vibrations, via said three-dimensional cavity (25'), to the front sleeve portion (11') on the anvil (21') to cause a permanent deformation of the front sleeve portion (1 1') to form the three-dimensional top portion (13').

2. The apparatus of claim 1, wherein a longitudinal center axis (CS2') of the three-dimensional cavity (25') is aligned with a longitudinal center axis (CS1) of the anvil (21') when the front sleeve portion (11') is received in the three-dimensional cavity (25').

3. The apparatus of any preceding claim, which is configured to, during application of the mechanical vibrations, press the anvil (21') and the sonotrode (25) towards each other with a predefined force (F) to compress the base material (1) of the front sleeve portion (11').

4. The apparatus of any preceding claim, wherein the three-dimensional cavity (25') extends from an entrance opening (250') into the sonotrode (25) in a depth direction (DD) and is defined by a cavity wall (250) that surrounds the three-dimensional cavity (25') in a peripheral direction.

5. The apparatus of claim 4, wherein the anvil comprises a three-dimensional surface portion (211) that is shaped in conformity with a three-dimensional wall portion (250a) of the cavity wall (250), said three-dimensional wall portion (250a) being circumferential in the peripheral direction and defining a band-shaped contact surface for engagement with the three-dimensional surface portion (211) of the anvil (21'), via the front sleeve portion (11').

6. The apparatus of any one of claims 4-5, wherein at least one of the anvil (21') or the cavity wall (250) comprises surface structures (210), which are configured to cause a local modification in engagement force onto the front sleeve portion (11') from the anvil (21') and the cavity wall (250).

7. The apparatus of claim 6, wherein at least a subset of the deformation zones (10') is configured to form a plurality of overlapping layers of the base material (1) when the front sleeve portion (11') is received in the three-dimensional cavity (25').

8. The apparatus of claim 7, wherein the surface structures (210) comprise elongated depressions configured to receive the plurality of overlapping layers of a respective deformation zone (10') in said at least a subset of the deformation zones.

9. The apparatus of any one or claims 4-8, wherein the cavity wall (250) comprises a shoulder-defining wall portion (SW), which is configured to deform at least part of the front sleeve portion (11') into a shoulder portion (SP) of the package body (13).

10. The apparatus of any one of claims 4-9, wherein a front end portion of the anvil (21') comprises a mounting structure (212) for a neck element (14), which comprises a tubular portion (14") for defining an access opening on the package body (13), wherein the mounting structure (212) is arranged to locate the neck element (14) at least partly within the front sleeve portion (11') when the front sleeve portion (11') is located on the anvil (21').

11. The apparatus of any one of claims 4-10, wherein the sonotrode (25) comprises first and second end surfaces (253', 253"), and a circumferential outer surface (251), which extends between the first and second end surfaces (253', 253"), wherein the three-dimensional cavity (25') is formed in the first end surface (253').

12. The apparatus of any preceding claim, further comprising a deformation unit (28), which is configured to, before the front sleeve portion (11') is received in the three-dimensional cavity (25'), engage the front sleeve portion (11') on the anvil (21') to cause a preparatory deformation of the front sleeve portion (11').

13. The apparatus of any preceding claim, wherein the base material (1) of the front sleeve portion (11') comprises a plastic material (1B) configured to be softened by the mechanical vibrations as applied by the sonotrode (25), and subsequently hardened in absence of the mechanical vibrations, to achieve the permanent deformation of the front sleeve portion (11').

14. The apparatus of any preceding claim, wherein the anvil (21') is removably included in an elongated holder (21) for receiving the sleeve (11) of base material.

15. A sonotrode comprising a cavity (25'), which is defined by a three-dimensional cavity wall (250) and configured to receive a three-dimensional anvil (21'), said sonotrode (25) being configured to apply mechanical vibrations to the three-dimensional anvil (21') via the three-dimensional cavity wall (250).
